# EUROPEAN PATENT APPLICATION

(11) **EP 3 859 735 A2**
(43) Date of publication of application: **04.08.2021**
(21) Application number: 21178557.1
(22) Date of filing: 09.06.2021
(51) Int. Cl.: G10L 21/007, G10L 21/013, G10L 25/30

(54) **VOICE CONVERSION METHOD, VOICE CONVERSION APPARATUS, ELECTRONIC DEVICE, AND STORAGE MEDIUM**

(30) Priority: 25.09.2020 CN 202011025400
(71) Applicant: BEIJING BAIDU NETCOM SCIENCE AND TECHNOLOGY CO. LTD., 100085 Beijing (CN)
(72) Inventor: WANG, Xilei, Beijing (CN); WANG, Wenfu, Beijing (CN); SUN, Tao, Beijing (CN)
(74) Representative: advotec.

(57) **Abstract**

The disclosure provides a voice conversion method, a voice conversion apparatus, an electronic device, and a storage medium, related to the field of voice conversion, speech interaction, natural language processing, and deep learning. The method includes: acquiring a source speech of a first user and a reference speech of a second user; extracting first speech content information and a first acoustic feature from the source speech; extracting a second acoustic feature from the reference speech; acquiring a reconstructed third acoustic feature by inputting the first speech content information, the first acoustic feature, and the second acoustic feature into a pre-trained voice conversion model, in which the pre-trained voice conversion model is acquired by training based on speeches of a third user; and synthesizing a target speech based on the third acoustic feature.

## Description

### TECHNICAL FIELD

The disclosure relates to the field of voice conversion, speech interaction, natural language processing, and deep learning in the field of computer technologies, especially to a voice conversion method, a voice conversion apparatus, an electronic device, and a storage medium.

### BACKGROUND

The voice conversion method may convert a speech segment of a user into a speech segment with a timbre of a target user, which may realize an imitation of the timbre of the target user.

### SUMMARY

A voice conversion method is provided in a first aspect. The method includes: acquiring a source speech of a first user and a reference speech of a second user; extracting first speech content information and a first acoustic feature from the source speech; extracting a second acoustic feature from the reference speech; acquiring a reconstructed third acoustic feature by inputting the first speech content information, the first acoustic feature, and the second acoustic feature into a pre-trained voice conversion model, in which the pre-trained voice conversion model is acquired by training based on speeches of a third user; and synthesizing a target speech based on the third acoustic feature.

A voice conversion apparatus is provided in a second aspect. The apparatus includes: an acquiring module, configured to acquire a source speech of a first user and a reference speech of a second user; a first extracting module, configured to extract first speech content information and a first acoustic feature from the source speech; a second extracting module, configured to extract a second acoustic feature from the reference speech; a conversion module, configured to acquire a reconstructed third acoustic feature by inputting the first speech content information, the first acoustic feature, and the second acoustic feature into a pre-trained voice conversion model, in which the pre-trained voice conversion model is acquired by training based on speeches of a third user; and a synthesizing module, configured to synthesize a target speech based on the third acoustic feature.

An electronic device is provided in a third aspect. The electronic device includes: at least one processor, and a memory communicatively connected to the at least one processor. The memory is configured to store instructions executable by the at least one processor, and when the instructions are executed by the at least one processor, the at least one processor is caused to implement the voice conversion method according to the first aspect of the disclosure.

A computer-readable storage medium is provided in a fourth aspect. The non-transitory computer-readable storage medium has stored therein instructions that, when executed by a computer, the computer is caused to implement the voice conversion method according to the first aspect of the disclosure.

A program product is provided in a fifth aspect. The program product has stored therein instructions that, when executed by one or more processors of an apparatus, causes the apparatus to perform the voice conversion method according to the first aspect of the disclosure.

A computer program is provided in a sixth aspect. The computer program is executing on a processor, to perform the voice conversion method according to the first aspect of the disclosure.

The preferred embodiments are defined in the dependent claims.

It should be understood that the content described in this section is not intended to identify the key or important features of the embodiments of the disclosure, nor is it intended to limit the scope of the disclosure. Additional features of the disclosure will be easily understood by the following description.

### BRIEF DESCRIPTION OF THE DRAWINGS

The accompanying drawings are used to understand the solution better, and do not constitute a limitation on the application, in which:
FIG. 1 is a flowchart of a voice conversion method according to a first embodiment of the disclosure.
FIG. 2 is a schematic diagram of a scene of a voice conversion method according to a second embodiment of the disclosure.
FIG. 3 is a schematic diagram of a scene of a voice conversion method according to a third embodiment of the disclosure.
FIG. 4 is a flowchart of acquiring a reconstructed third acoustic feature in a voice conversion method according to a fourth embodiment of the disclosure.
FIG. 5 is a flowchart of acquiring a pre-trained voice conversion model in a voice conversion method according to a fourth embodiment of the disclosure.
FIG. 6 is a block diagram of a voice conversion apparatus according to a first embodiment of the disclosure.
FIG. 7 is a block diagram of a voice conversion apparatus according to a second embodiment of the disclosure.
FIG. 8 is a block diagram of an electronic device for implementing a voice conversion method according to some embodiments of the disclosure.

### DETAILED DESCRIPTION

The following describes the exemplary embodiments of the disclosure with reference to the accompanying drawings, which includes various details of the embodiments of the disclosure to facilitate understanding and shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

The voice conversion method in the related art requires the user to record speech segments in advance, a model training and updating may be performed based on the speech segments of the user, and the voice conversion may be performed based on the updated model. This method has higher requirements for the user's speech recording. The model needs to be updated every time before the voice conversion is performed, and the waiting duration for the voice conversion is long and flexibility is poor.

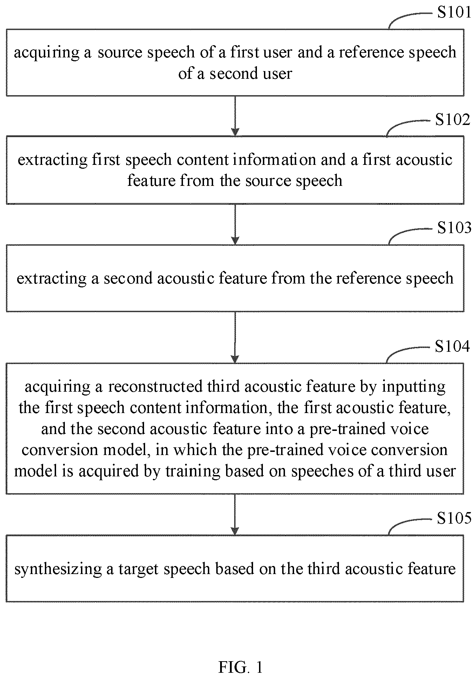

FIG. 1 is a flowchart of a voice conversion method according to a first embodiment of the disclosure.

As illustrated in FIG. 1, the voice conversion method according to the first embodiment of the disclosure may include actions in the following blocks.

At block S101, a source speech of a first user and a reference speech of a second user are acquired.

It should be noted that an execution body of the voice conversion method in some embodiments of the disclosure may be a hardware device with data and information processing capabilities and/or necessary software to drive the hardware device to work. Optionally, the execution body may include a workstation, a server, a computer, a user terminal, and other equipment. The user terminal may include but be not limited to, a mobile phone, a personal computer, a smart speech interaction device, a smart home appliance, and a vehicle-mounted terminal.

It should be noted that the source speech may be a speech segment uttered by the first user without timbre conversion and may have timbre characteristics of the first user; and the reference speech may be a speech segment uttered by the second user and may have timbre characteristics of the second user. The voice conversion method in some embodiments of the disclosure may convert the source speech of the first user into a speech segment with the timbre of the second user characterized by the reference speech of the second user, so as to realize the imitation of the timbre of the second user. The first user and the second user may include, but be not limited to, humans, smart speech interaction devices, and the like.

Optionally, both the source speech of the first user and the reference speech of the second user may be acquired through recording, network transmission, or the like.

It should be understood that when the source speech of the first user and/or the reference speech of the second user are acquired through recording, the device may have a speech collection apparatus, and the speech collection apparatus may be a microphone (Microphone), a microphone array, or the like.

Alternatively, when the source speech of the first user and/or the reference speech of the second user are acquired through network transmission, the device may have a networking apparatus, and network transmission may be performed with other devices or servers through the networking apparatus.

In some implementations, the voice conversion method provided in some embodiments of the disclosure may be applicable to a smart speech interaction device. The smart speech interaction device may implement functions such as reading article aloud, question and answer. If a user wants to replace the timbre of reading aloud a text by the smart speech interaction device with his/her timbre, the source speech of reading aloud the text by the smart speech interaction device may be acquired and his/her reference speech may be recorded in this scenario.

In some implementations, the voice conversion method provided in some embodiments of the disclosure may also be applicable to a video APP (Application). The video APP may implement the secondary creation of film and television works. For example, the user may want to replace a speech segment in the film and television work with a speech segment having an actor's timbre and semantics. In this scenario, the user may record his/her source speech and download a reference speech segment of the actor through the network.

At block S102, first speech content information and a first acoustic feature are extracted from the source speech.

In some embodiments of the disclosure, the first speech content information may include but be not limited to a speech text and a semantic text of the source speech. The first acoustic feature may include but be not limited to a Mel feature, a Mel-scale frequency cepstral coefficient, a perceptual linear predict (PLP) feature, etc.

In some implementations, the first speech content information may be extracted from the source speech through the speech recognition model, and the first acoustic feature may be extracted from the source speech through the acoustic model. Both the speech recognition model and the acoustic model may be preset based on actual situations.

At block S103, a second acoustic feature is extracted from the reference speech.

Reference should be made to the relevant content of extracting the first acoustic feature from the source speech in the foregoing embodiments for the implementation process and principle of the action at block S103, which will not be repeated herein.

At block S104, a reconstructed third acoustic feature is acquired by inputting the first speech content information, the first acoustic feature, and the second acoustic feature into a pre-trained voice conversion model, in which the pre-trained voice conversion model is acquired by training based on speeches of a third user.

In some embodiments of the disclosure, the voice conversion model may be pre-trained based on speeches of the third user to acquire the pre-trained voice conversion model, which is configured to acquire the reconstructed third acoustic feature based on the first speech content information, the first acoustic feature, and the second acoustic feature.

It should be noted that the related content of the third acoustic feature may refer to the related content of the first acoustic feature in the above-mentioned embodiments, which will not be repeated herein.

Optionally, the first acoustic feature, the second acoustic feature, and the third acoustic feature may all be Mel features.

It should be understandable that the pre-trained voice conversion model is not related to the first user and the second user. Compared with the related art where the user needs to record a long-term high-quality speech before each voice conversion and the voice conversion model is trained and updated based on the speech recorded by the user, the voice conversion model in this method is pre-established and does not need to be trained and updated based on different users in the subsequent. It has a high flexibility, helps to save computing resources and storage resources, realizes real-time voice conversion, helps to shorten the waiting duration of voice conversion, and has low speech recording requirements for users.

It should be understood that the voice conversion method provided in some embodiments of the disclosure may be applicable to scenarios such as multilingual switching and multi-timbre switching. The multilingual switching scenario refers to a case where the language corresponding to the source speech of the first user is different from the language corresponding to the reference speech of the second user. The multi-timbre switching scenario refers to a case where there is one first user and multiple second users.

A plurality of different voice conversion models need to be established in scenarios such as multilingual switching and multi-timbre switching in the related art. The training and updating of the voice conversion models may be cumbersome, and the stability and smoothness of voice conversion may be poor. Only one voice conversion model needs to be established in advance in the disclosure, and there is no need to train and update the model based on different users in the future, which helps to improve the stability and smoothness of voice conversion in scenarios such as multilingual switching and multi-timbre switching including Mandarin.

At block S105, a target speech is synthesized based on the third acoustic feature.

In some embodiments of the disclosure, the timbre characteristics corresponding to the target speech may be the timbre characteristics corresponding to the reference speech of the second user. That is, the method may realize the imitation of the timbre of the second user.

Optionally, the speech content information corresponding to the target speech may be the first speech content information of the source speech. That is, the method may retain the speech content information of the source speech of the first user.

Optionally, characteristics such as the speech speed, emotion, and rhythm corresponding to the target speech may be characteristics such as the speech speed, emotion, and rhythm corresponding to the source speech. That is, the method may retain characteristics such as the speech speed, emotion, and rhythm of the source speech of the first user, which may help to improve the consistency between the target speech and the source speech.

Optionally, the target speech may be synthesized based on the third acoustic model by a vocoder.

In summary, with the voice conversion method provided in the embodiments of the disclosure, the first speech content information and the first acoustic feature of the source speech and the second acoustic feature of the reference speech may be inputted into the pre-trained voice conversion model, to acquire the reconstructed third acoustic feature, and the target speech may be synthesized based on the reconstructed third acoustic feature. The voice conversion model is pre-established and does not need to be trained and updated in the future. It has the high flexibility and may realize the instant voice conversion, which helps to shorten the waiting duration of voice conversion and is suitable for scenarios such as multilingual switching and multi-timbre switching.

On the basis of any of the foregoing embodiments, extracting the first speech content information from the source speech at block S102 may include: acquiring a phonetic posterior gram by inputting the source speech into a pre-trained multilingual automatic speech recognition model; and using the phonetic posterior gram as the first speech content information.

It should be noted that the phonetic posterior gram (PPG) may represent the speech content information of the speech, and is not related to the originator of the speech.

In some embodiments of the disclosure, the phonetic posterior gram may be acquired through a multilingual automatic speech recognition (ASR) model, and the phonetic posterior gram may be used as the first speech content information of the source speech. The multilingual automatic speech recognition does not limit the language of the source speech, and may perform speech recognition on the source speeches of multiple different languages to acquire the corresponding phonetic posterior grams.

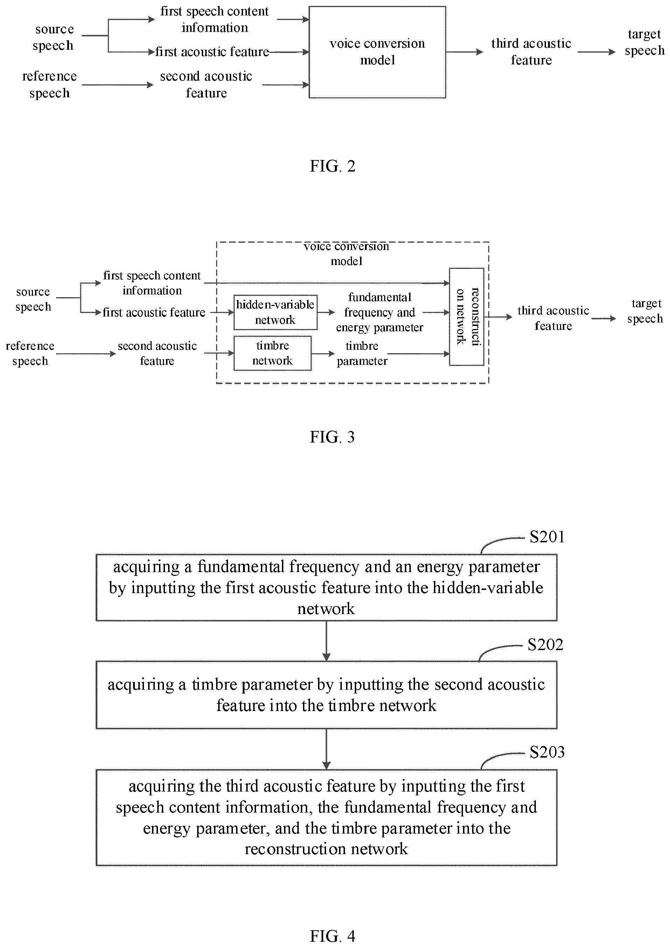

On the basis of any of the foregoing embodiments, as illustrated in FIG. 2, the first speech content information and the first acoustic feature may be extracted from the source speech and the second acoustic feature may be extracted from the reference speech. The first speech content information, the first acoustic feature, and the second acoustic feature may be inputted into the pre-trained voice conversion model to acquire the reconstructed third acoustic feature. The target speech may be synthesized based on the third acoustic feature to achieve the voice conversion.

It is understandable that multiple networks may be included in the voice conversion model. Taking FIG. 3 as an example, the voice conversion model may include a hidden-variable network, a timbre network, and a reconstruction network.

Furthermore, as illustrated in FIG. 4, acquiring the reconstructed third acoustic feature by inputting the first speech content information, the first acoustic feature, and the second acoustic feature into the pre-trained voice conversion model at block S104 may include the following.

At block S201, a fundamental frequency and an energy parameter are acquired by inputting the first acoustic feature into the hidden-variable network.

In some embodiments of the disclosure, the hidden-variable network may acquire the fundamental frequency and the energy parameter of the source speech based on the first acoustic feature. The hidden-variable network may be set based on actual situations. The energy parameter may include but be not limited to the frequency and amplitude of the source speech, which is not limited herein.

It is understandable that the fundamental frequency and the energy parameter of the source speech is a low-dimensional parameter of the source speech, which may reflect the fundamental frequency and the energy of the source speech and other low-dimensional characteristics.

Optionally, acquiring the fundamental frequency and energy parameter by inputting the first acoustic feature into the hidden-variable network may include: inputting the first acoustic feature into the hidden-variable network, such that the hidden-variable network compresses the first acoustic feature on a frame scale, and extracts the fundamental frequency and the energy parameter from the compressed first acoustic feature. Therefore, the method may acquire the fundamental frequency and the energy parameter from the first acoustic feature in a compressing manner.

In some implementations, it is assumed that the length of the source speech is T seconds, and the hidden-variable network may acquire a matrix of T*3 based on the first acoustic feature, and the matrix includes the fundamental frequency and the energy parameter of the source speech.

At block S202, a timbre parameter is acquired by inputting the second acoustic feature into the timbre network.

In some embodiments of the disclosure, the timbre network may acquire the timbre parameter of the reference speech based on the second acoustic feature. The timbre network may be set based on actual situations. For example, the timbre network may include but be not limited to a deep neural network (DNN), a recurrent neural network (RNN), a convolutional neural network (CNN) and on the like.

It is understandable that the timbre parameter of the reference speech may reflect the timbre characteristics of the reference speech.

Optionally, acquiring the timbre parameter by inputting the second acoustic feature into the timbre network may include: inputting the second acoustic feature into the timbre network, such that the timbre network abstracts the second acoustic feature by a deep recurrent neural network (DRNN) and a variational auto encoder (VAE) to acquire the timbre parameter. Therefore, the method may acquire the timbre parameter from the second acoustic feature in an abstracting manner.

In implementations, the timbre network may acquire a 1*64 matrix based on the second acoustic feature, and the matrix includes the timbre parameter of the reference speech.

At block S203, the third acoustic feature is acquired by inputting the first speech content information, the fundamental frequency and energy parameter, and the timbre parameter into the reconstruction network.

In some embodiments of the disclosure, the reconstruction network may acquire the third acoustic feature based on the first speech content information, the fundamental frequency and the energy parameter, and the timbre parameter. For the relevant content of the reconstruction network, reference should be made to the relevant content of the timbre network in the above embodiments, which is not be repeated herein.

It is understandable that the first speech content information may reflect the speech content information of the source speech, the fundamental frequency and the energy parameter may reflect the fundamental frequency, the energy and other low-dimensional characteristics of the source speech, and the timbre parameter may reflect the timbre characteristics of the reference speech. The third acoustic feature acquired based on the first speech content information, the fundamental frequency and the energy parameter, and the timbre parameter may reflect the speech content information of the source speech, as well as the low-dimensional characteristics such as the fundamental frequency and the energy of the source speech, and the timbre characteristics of the reference speech, so that when the target speech is subsequently synthesized based on the third acoustic feature, the speech content information of the source speech of the first user may be retained, the fundamental frequency and the energy stability of the target speech may be maintained, and the timbre characteristics of the reference speech of the second user may be retained.

Optionally, acquiring the third acoustic feature by inputting the first speech content information, the fundamental frequency and energy parameter, and the timbre parameter into the reconstruction network may include: inputting the first speech content information, the fundamental frequency and energy parameter, and the timbre parameter into the reconstruction network, such that the reconstruction network performs an acoustic feature reconstruction on the first speech content information, the fundamental frequency and energy parameter, and the timbre parameter by a deep recurrent neural network to acquire the third acoustic feature.

Therefore, the voice conversion model in this method may include the hidden-variable network, the timbre network, and the reconstruction network. The hidden-variable network may acquire the fundamental frequency and the energy parameter of the source speech based on the first acoustic feature; the timbre network may acquire the timbre parameter of the reference speech based on the second acoustic feature; and the reconstruction network may acquire the third acoustic feature based on the first speech content information, the fundamental frequency and energy parameter, and the timbre parameter. Therefore, when synthesizing the target speech based on the third acoustic feature, the speech content information of the source speech of the first user may be retained, the stability of the fundamental frequency and energy of the target speech may be maintained, and the timbre characteristics of the reference speech of the second user may be retained.

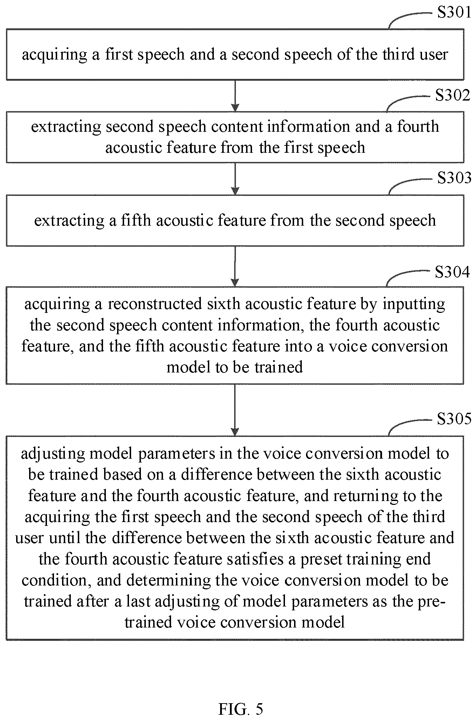

On the basis of any of the foregoing embodiments, as illustrated in FIG. 5, acquiring the pre-trained speech conversion model may include the following.

At block S301, a first speech and a second speech of the third user are acquired.

In some embodiments of the disclosure, the first speech is different from the second speech.

At block S302, second speech content information and a fourth acoustic feature are extracted from the first speech.

At block S303, a fifth acoustic feature is extracted from the second speech.

At block S304, a reconstructed sixth acoustic feature is acquired by inputting the second speech content information, the fourth acoustic feature, and the fifth acoustic feature into a voice conversion model to be trained.

For the implementation process and principles of blocks S301-S304, reference should be made to the relevant content in the above-mentioned embodiments, which may not be repeated herein.

At block S305, model parameters in the voice conversion model to be trained are adjusted based on a difference between the sixth acoustic feature and the fourth acoustic feature, and it returns to the acquiring the first speech and the second speech of the third user until the difference between the sixth acoustic feature and the fourth acoustic feature satisfies a preset training end condition, and the voice conversion model to be trained after a last adjusting of model parameters is determined as the pre-trained voice conversion model.

In some embodiments of the disclosure, two different speeches of the same user may be employed to train the voice conversion model to be trained each time, in which one of the speeches is employed as the source speech in the above-mentioned embodiments, and another of the speeches is employed as the reference speech in the above-mentioned embodiments. In the disclosure, the first speech and the second speech of the third user are employed for training the voice conversion model to be trained as an example.

For example, the first speech of the third user may be used as the source speech in the above embodiments. The second speech content information and the fourth acoustic feature may be extracted from the first speech. The second speech of the third user may be used as the reference speech in the above embodiments. The fifth acoustic feature may be extracted from the second speech. The second speech content information, the fourth acoustic feature, and the fifth acoustic feature are input into the voice conversion model to be trained to acquire the reconstructed sixth acoustic feature.

It is understandable that since the first speech and the second speech are both uttered by the third user, the target speech should be not much different from the source speech, and the reconstructed sixth acoustic feature should be not much different from the fourth acoustic feature. At this time, the model parameters in the voice conversion model to be trained are adjusted based on the difference between the sixth acoustic feature and the fourth acoustic feature, and it returns to the action of acquiring the first speech and the second speech of the third user and the subsequent actions. The voice conversion model to be trained may be trained and updated based on multiple sets of sample data, until the difference between the sixth acoustic feature and the fourth acoustic feature satisfies the preset training end condition. The voice conversion model to be trained after a last adjusting of model parameters is determined as the pre-trained voice conversion model.

The preset training end condition may be set based on actual situations, for example, it may be set that the difference between the sixth acoustic feature and the fourth acoustic feature is less than the preset threshold.

Therefore, the method may train and update the voice conversion model to be trained based on sets of sample data to acquire the pre-trained voice conversion model.

As another possible implementation manner, the voice conversion model may include networks, and each network corresponds to its own network parameters. A joint training may be performed on the networks in the voice conversion model to be trained based on the sets of sample data, to separately adjust the network parameters in each network in the voice conversion model to be trained, so that the pre-trained voice conversion model may be acquired.

Taking FIG. 3 as an example, the voice conversion model may include a hidden-variable network, a timbre network, and a reconstruction network. The joint training may be performed on the hidden-variable network, the timbre network, and the reconstruction network in the voice conversion model to be trained, to separately adjust the network parameters in the hidden-variable network, the timbre network, and the reconstruction network, so that the pre-trained voice conversion model may be acquired.

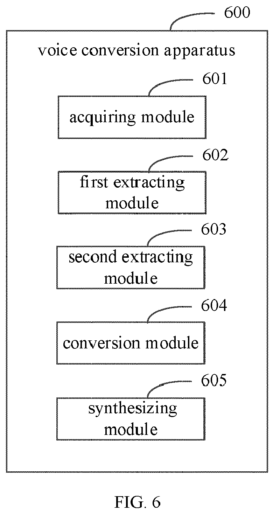

FIG. 6 is a block diagram of a voice conversion apparatus according to a first embodiment of the disclosure.

As illustrated in FIG. 6, the voice conversion apparatus 600 according to some embodiments of the disclosure may include an acquiring module 601, a first extracting module 602, a second extracting module 603, a conversion module 604, and a synthesizing module 605.

The acquiring module 601 is configured to acquire a source speech of a first user and a reference speech of a second user.

The first extracting module 602 is configured to extract first speech content information and a first acoustic feature from the source speech.

The second extracting module 603 is configured to extract a second acoustic feature from the reference speech.

The conversion module 604 is configured to acquire a reconstructed third acoustic feature by inputting the first speech content information, the first acoustic feature, and the second acoustic feature into a pre-trained voice conversion model, in which the pre-trained voice conversion model is acquired by training based on speeches of a third user.

The synthesizing module 605 is configured to synthesize a target speech based on the third acoustic feature.

In some embodiments of the disclosure, the first extracting module 602 is configured to: acquire a phonetic posterior gram by inputting the source speech into a pre-trained multilingual automatic speech recognition model; and use the phonetic posterior gram as the first speech content information.

In some embodiments of the disclosure, the first acoustic feature, the second acoustic feature, and the third acoustic feature are Mel features.

In some embodiments of the disclosure, the voice conversion model includes a hidden-variable network, a timbre network, and a reconstruction network. The conversion module 604 includes: a first inputting unit, configured to acquire a fundamental frequency and an energy parameter by inputting the first acoustic feature into the hidden-variable network; a second inputting unit, configured to acquire a timbre parameter by inputting the second acoustic feature into the timbre network; and a third inputting unit, configured to acquire the third acoustic feature by inputting the first speech content information, the fundamental frequency and energy parameter, and the timbre parameter into the reconstruction network.

In some embodiments of the disclosure, the first inputting unit is configured to: input the first acoustic feature into the hidden-variable network, such that the hidden-variable network compresses the first acoustic feature on a frame scale, and extracts the fundamental frequency and energy parameter from the compressed first acoustic feature.

In some embodiments of the disclosure, the second inputting unit is configured to: input the second acoustic feature into the timbre network, such that the timbre network abstracts the second acoustic feature by a deep recurrent neural network and a variational auto encoder to acquire the timbre parameter.

In some embodiments of the disclosure, the third inputting unit is configured to: input the first speech content information, the fundamental frequency and energy parameter, and the timbre parameter into the reconstruction network, such that the reconstruction network performs an acoustic feature reconstruction on the first speech content information, the fundamental frequency and energy parameter, and the timbre parameter by a deep recurrent neural network to acquire the third acoustic feature.

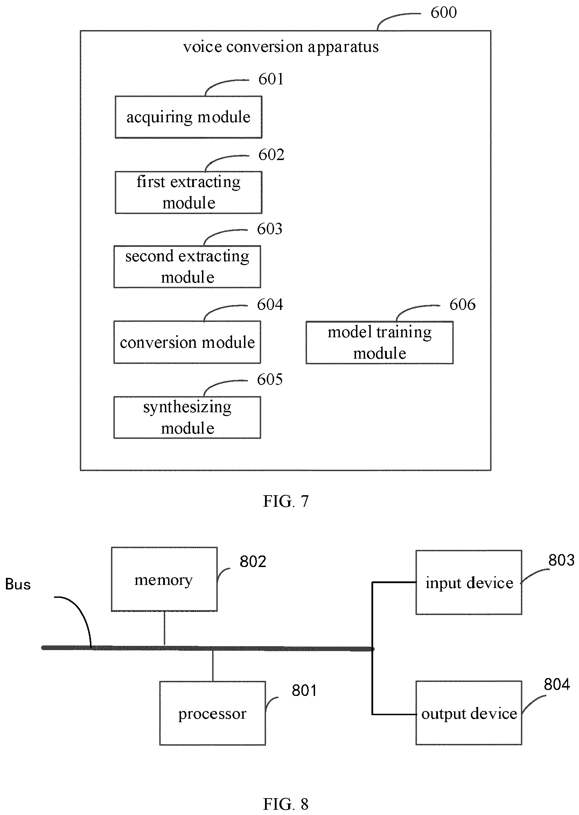

In some embodiments of the disclosure, as illustrated in FIG. 7, the apparatus 600 further includes a model training module 606. The model training module 606 is configured to: acquire a first speech and a second speech of the third user; extract second speech content information and a fourth acoustic feature from the first speech; extract a fifth acoustic feature from the second speech; acquire a reconstructed sixth acoustic feature by inputting the second speech content information, the fourth acoustic feature, and the fifth acoustic feature into a voice conversion model to be trained; adjust model parameters in the voice conversion model to be trained based on a difference between the sixth acoustic feature and the fourth acoustic feature, and return to acquire the first speech and the second speech of the third user until the difference between the sixth acoustic feature and the fourth acoustic feature satisfies a preset training end condition; and determine the voice conversion model to be trained after a last adjusting of model parameters as the pre-trained voice conversion model.

In summary, with the voice conversion apparatus provided in the embodiments of the disclosure, the first speech content information and the first acoustic feature of the source speech and the second acoustic feature of the reference speech may be inputted into the pre-trained voice conversion model, to acquire the reconstructed third acoustic feature, and the target speech may be synthesized based on the reconstructed third acoustic feature. The voice conversion model is pre-established and does not need to be trained and updated in the future. It has the high flexibility and may realize the instant voice conversion, which helps to shorten the waiting duration of voice conversion and is suitable for scenarios such as multilingual switching and multi-timbre switching.

According to the embodiments of the disclosure, the disclosure also provides an electronic device and a readable storage medium.

FIG. 8 is a block diagram of an electronic device for implementing a voice conversion method according to some embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as smart speech interaction devices, personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 8, the electronic device includes: one or more processors 801, a memory 802, and interfaces for connecting various components, including a high-speed interface and a low-speed interface. The various components are interconnected using different buses and may be mounted on a common mainboard or otherwise installed as required. The processor 801 may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 801 is taken as an example in FIG. 8.

The memory 802 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 802 is configured to store non-transitory software programs, non-transitory computer executable programs and modules, such as program instructions/modules corresponding to the method in the embodiment of the disclosure (For example, an acquiring module 601, a first extracting module 602, a second extracting module 603, a conversion module 604, and a synthesizing module 605 in FIG. 6). The processor 801 executes various functional applications and data processing of the server by running non-transitory software programs, instructions, and modules stored in the memory 802, that is, implementing the method in the foregoing method embodiments.

The memory 802 may include a storage program area and a storage data area, where the storage program area may store an operating system and application programs required for at least one function. The storage data area may store data created according to the use of the electronic device, and the like. In addition, the memory 802 may include a high-speed random access memory, and a non-transitory memory, such as at least one magnetic disk storage device, a flash memory device, or other non-transitory solid-state storage device. In some embodiments, the memory 802 may optionally include a memory remotely disposed with respect to the processor 801, and these remote memories may be connected to the electronic device through a network. Examples of the above network include, but are not limited to, the Internet, an intranet, a local area network, a mobile communication network, and combinations thereof.

The electronic device for implementing the method may further include: an input device 803 and an output device 804. The processor 801, the memory 802, the input device 803, and the output device 804 may be connected through a bus or in other manners. In FIG. 8, the connection through the bus is taken as an example.

The input device 803 may receive inputted numeric or character information, and generate key signal inputs related to user settings and function control of an electronic device, such as a touch screen, a keypad, a mouse, a trackpad, a touchpad, an indication rod, one or more mouse buttons, trackballs, joysticks and other input devices. The output device 804 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host. It is a host product in the cloud computing service system to solve the shortcomings of difficult management and weak scalability in the conventional physical host and the VPS service ("Virtual Private Server").

In the method according to the embodiments of the disclosure, the server may perform speech recognition and semantic analysis according to the user's first speech signal sent by the smart speech interaction device to obtain the user's semantic text, and may obtain the service query result according to the semantic text and feed it back to the smart speech interaction device. Using the speech processing technology to automate service processing, users may handle service without the assistance of staff, and the labor cost is low, which helps reduce people's waiting duration and processing time for service processing, and improves the efficiency of service processing.

It should be understood that various forms of processes shown above may be used to reorder, add, or delete steps. For example, the steps described in the disclosure may be performed in parallel, sequentially, or in different orders. As long as the desired results of the technical solutions disclosed in the disclosure can be achieved, no limitation is made herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of this application shall be included in the protection scope of this application.

## Claims

1. A voice conversion method, comprising:
acquiring (S101) a source speech of a first user and a reference speech of a second user;
extracting (S102) first speech content information and a first acoustic feature from the source speech;
extracting (S103) a second acoustic feature from the reference speech;
acquiring (S104) a reconstructed third acoustic feature by inputting the first speech content information, the first acoustic feature, and the second acoustic feature into a pre-trained voice conversion model, in which the pre-trained voice conversion model is acquired by training based on speeches of a third user; and
synthesizing (S105) a target speech based on the third acoustic feature.

2. The method as claimed in claim 1, wherein extracting (S102) the first speech content information from the source speech comprises:
acquiring a phonetic posterior gram by inputting the source speech into a pre-trained multilingual automatic speech recognition model; and
using the phonetic posterior gram as the first speech content information.

3. The method as claimed in claim 1 or 2, wherein the first acoustic feature, the second acoustic feature, and the third acoustic feature are Mel features.

4. The method as claimed in any one of claims 1 to 3, wherein the voice conversion model comprises a hidden-variable network, a timbre network, and a reconstruction network, and acquiring (S104) the reconstructed third acoustic feature by inputting the first speech content information, the first acoustic feature, and the second acoustic feature into the pre-trained voice conversion model comprises:
acquiring (S201) a fundamental frequency and an energy parameter by inputting the first acoustic feature into the hidden-variable network;
acquiring (S202) a timbre parameter by inputting the second acoustic feature into the timbre network; and
acquiring (S203) the third acoustic feature by inputting the first speech content information, the fundamental frequency and energy parameter, and the timbre parameter into the reconstruction network.

5. The method as claimed in claim 4, wherein acquiring (S201) the fundamental frequency and energy parameter by inputting the first acoustic feature into the hidden-variable network comprises:
inputting the first acoustic feature into the hidden-variable network, such that the hidden-variable network compresses the first acoustic feature on a frame scale, and extracts the fundamental frequency and energy parameter from the compressed first acoustic feature.

6. The method as claimed in claim 4 or 5, wherein acquiring (S202) the timbre parameter by inputting the second acoustic feature into the timbre network comprises:
inputting the second acoustic feature into the timbre network, such that the timbre network abstracts the second acoustic feature by a deep recurrent neural network and a variational auto encoder to acquire the timbre parameter.

7. The method as claimed in claim 4, 5, or 6, wherein acquiring (S203) the third acoustic feature by inputting the first speech content information, the fundamental frequency and energy parameter, and the timbre parameter into the reconstruction network comprises:
inputting the first speech content information, the fundamental frequency and energy parameter, and the timbre parameter into the reconstruction network, such that the reconstruction network performs an acoustic feature reconstruction on the first speech content information, the fundamental frequency and energy parameter, and the timbre parameter by a deep recurrent neural network to acquire the third acoustic feature.

8. The method as claimed in any one of claims 1 to 7, further comprising:
acquiring (S301) a first speech and a second speech of the third user;
extracting (S302) second speech content information and a fourth acoustic feature from the first speech;
extracting (S303) a fifth acoustic feature from the second speech;
acquiring (S304) a reconstructed sixth acoustic feature by inputting the second speech content information, the fourth acoustic feature, and the fifth acoustic feature into a voice conversion model to be trained;
adjusting (S305) model parameters in the voice conversion model to be trained based on a difference between the sixth acoustic feature and the fourth acoustic feature, and returning to the acquiring the first speech and the second speech of the third user until the difference between the sixth acoustic feature and the fourth acoustic feature satisfies a preset training end condition; and
determining (S305) the voice conversion model to be trained after a last adjusting of model parameters as the pre-trained voice conversion model.

9. A voice conversion apparatus, comprises:
an acquiring module (601), configured to acquire a source speech of a first user and a reference speech of a second user;
a first extracting module (602), configured to extract first speech content information and a first acoustic feature from the source speech;
a second extracting module (603), configured to extract a second acoustic feature from the reference speech;
a conversion module (604), configured to acquire a reconstructed third acoustic feature by inputting the first speech content information, the first acoustic feature, and the second acoustic feature into a pre-trained voice conversion model, in which the pre-trained voice conversion model is acquired by training based on speeches of a third user; and
a synthesizing module (605), configured to synthesize a target speech based on the third acoustic feature.

10. The apparatus as claimed in claim 9, wherein the first extracting module (602) is configured to:
acquire a phonetic posterior gram by inputting the source speech into a pre-trained multilingual automatic speech recognition model; and
use the phonetic posterior gram as the first speech content information.

11. The apparatus as claimed in claim 9 or 10, wherein the voice conversion model comprises a hidden-variable network, a timbre network, and a reconstruction network, and the conversion module (604) comprises:
a first inputting unit, configured to acquire a fundamental frequency and an energy parameter by inputting the first acoustic feature into the hidden-variable network;
a second inputting unit, configured to acquire a timbre parameter by inputting the second acoustic feature into the timbre network; and
a third inputting unit, configured to acquire the third acoustic feature by inputting the first speech content information, the fundamental frequency and energy parameter, and the timbre parameter into the reconstruction network.

12. An electronic device, comprising:
at least one processor; and
a memory communicatively connected to the at least one processor; wherein,
the memory is configured to store instructions executable by the at least one processor, and when the instructions are executed by the at least one processor, the at least one processor is caused to implement the method according to any one of claims 1 to 8.

13. A computer-readable storage medium having stored therein instructions that, when executed by a computer, the computer is caused to implement the method according to any one of claims 1 to 8.

14. A program product having stored therein instructions that, when executed by one or more processors of an apparatus, causes the apparatus to perform the method according to any one of claims 1 to 8.

15. A computer program, which when executing on a processor, performs the method according to any one of claims 1 to 8.
